# EUROPEAN PATENT SPECIFICATION

(11) **EP 3 900 504 B1**
(45) Date of publication and mention of the grant of the patent: **14.08.2024**
(21) Application number: 20170544.9
(22) Date of filing: 21.04.2020
(51) Int. Cl.: A01B 1/00, A01B 3/40, A01B 3/46, A01B 5/08, A01B 5/14

(54) **AGRICULTURAL PLOUGH**
LANDWIRTSCHAFTLICHER PFLUG
CHARRUE AGRICOLE

(43) Date of publication of application: 27.10.2021
(73) Proprietor: CNH Industrial Sweden AB, 590 96 Överum (SE)
(72) Inventor: Hertzog, Daniel, 59376 Blackstad (SE); Linderson, Bengt Per-Inge, 594 94 Odensvi (SE); Wallin, Per Dennis, 593 37 Västervik (SE); Nilsson, Carl Ola Fredrik, 59340 Västervik (SE); Svensson, Robert, 59095 Loftahammar (SE); Nåhdin, Rickard Karl Gustav, 59492 Gamleby (SE)
(74) Representative: Heuking Kühn Lüer Wojtek PartGmbB

(56) References cited:
- EP-A2- 1 082 887
- EP-A2- 2 095 700
- DE-A1- 3 428 927
- FR-A1- 2 623 686
- JP-A- H06 165 603
- US-A- 2 633 787

## Description

### Background of the Invention

The present invention relates to an agricultural plough and a method of operating a plough.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern ploughs typically include a plurality of plough bodies connected to a plough frame such that they are in a laterally offset manner from each other when the plough is in use. Each plough body is connected to the plough frame via corresponding beams. The plough frame, in turn, is connected to a towing or pushing vehicle via a hitch arranged at a front or back end of the frame.

Depending on the density of the soil, a working depth of the plough bodies can be adjusted. For instance, the plough bodies working depth may be shallow in harder (dense) soils, whereas a deeper working depth may be applied in softer (less dense) soils. The plough bodies can be rigidly attached to the frame, such that their distance from the frame remains constant. Accordingly, the working depth of the ploughs are then adjusted by varying the ground clearance of the frame. If the frame is brought closer to the ground surface, the ground clearance is reduced, and the plough bodies penetrate deeper into the soil. Similarly, if the frame is lifted further off the ground, the ground clearance is increased and the plough bodies are raised, thereby reducing the working depth.

The ground clearance of the frame may be controlled by one or more depth wheels. The one or more depth wheels may be connected to any part of the frame such as the rear end of the frame. An adjustable linkage may be provided between the frame and the depth wheel to allow for changes in the distance between the depth wheel and the frame. During ploughing, the depth wheel runs on the ground surface and supports the weight of the plough. If the distance between the depth wheel and the frame is reduced, then the ground clearance between the frame and the ground surface reduces accordingly. On the other hand, if the distance between the depth wheel and the frame is increased, the ground clearance of the frame increases. As outlined before, changing the frame's ground clearance results in a variation of the plough body working depth.

Most modern ploughs are of the reversible type, in which the frame is rotatable by around 180 degrees (i.e. reversable) with respect to the headstock. A turning cylinder attached to the headstock may be used to rotate (reverse) the plough. During rotation of the frame, a first set of plough bodies, which was initially arranged below the frame (first configuration), is transferred to the top of the frame. At the same time, a second set of plough bodies, which was initially arranged on top of the frame, is then transferred to a position below the frame. The reversible plough is then in its second configuration. The frame may be repeatedly rotated (reversed) between the first and second configuration during the ploughing process, particularly during turning manoeuvres on the headlands. Whenever the plough is reversed, the first and second set of plough bodies swap position.

The headstock can include end-stops that define end positions for the rotation of the frame about the headstock as it is transferred between the first and second configurations. In this way, the two mechanical end-stops define a roll-angle of the frame relative to the headstock in the first and the second configurations respectively. The roll-angle of the frame represents the degree of rotation about a longitudinal axis of the frame. The end-stops may be manually adjustable such that the roll-angle of the frame, when the plough is in the first and second configurations, can be adjusted by adjusting the physical location of the mechanical stops on the headstock. Adjusting the end-stops can be cumbersome and time-consuming. Moreover, end-stops are known to have a relatively short service life, increasing cost and downtime potential of the agricultural plough. Such a plough is disclosed for instance in EP1082887.

In view of the above, there is generally a need for an improved agricultural plough.

It is an aim of the present invention to solve or at least ameliorate one or more problems of the prior art.

### Summary of the Invention

Aspects and embodiments of the invention provide an agricultural plough and a method of controlling an agricultural plough as claimed in the appended claims.

According to an aspect of the present invention, there is provided an agricultural plough comprising:
a reversible frame that is transferrable between a first configuration and a second configuration;
a first ground engaging tool that is connected to the frame such that the first ground engaging tool is in an active position when the frame is in its first configuration;
a second ground engaging tool that is connected to the frame such that the second ground engaging tool is in an active position when the frame is in its second configuration;
an actuator mechanism that is configured to control reversal of the frame between its first configuration and second configuration; and
a controller that is configured to:
   receive end-stop-position-data that is representative of a desired roll-angle of the frame in its first and/or second configuration;
   determine an actuator-control-signal for the actuator mechanism based on the end-stop-position-data, wherein the actuator-control-signal is for setting the desired roll-angle of the frame in its first and/or second configuration;
   provide the actuator-control-signal to the actuator mechanism during reversal of the frame between its first and second configurations.
In one embodiment, the controller is configured to receive reversal-initiation-data representative of a time for initiating the reversal process, the reversal-initiation-data preferably comprising one or more of:
   an operator-input requesting initiation of the reversal process;
   location-data regarding the position of the agricultural plough;
   vehicle-data representative of operating parameters of a work vehicle driving the plough.

In another embodiment, the vehicle-data comprises motion-data representative of the speed and direction of movement of a work vehicle connected to the agricultural plough.

The agricultural plough may comprise a feedback sensor for determining sensor-data indicative of a position of the actuator mechanism, wherein the control unit may be configured to:
determine a desired actuator position on the basis of the end-stop-position-data;
receive the sensor-data;
determine a current position of the actuator mechanism on the basis of the sensor-data;
compare the current position of the actuator mechanism to the desired actuator position; and
determine the actuator-control-signal for the actuator mechanism based on the comparison result.

The actuator mechanism may comprise a turning actuator that is capable of setting a plurality of different roll-angles of the frame in its first and/or second configuration based on the actuator-control-signal.

In yet another embodiment, the turning actuator is a telescopic turning cylinder transferable between a fully extended and a fully retracted position, and wherein the turning actuator is connected to the frame in such a way that, in the first and/or the second configuration of the frame, the controller is configured to increase the roll-angle by extending the turning actuator and decrease the roll-angle by retracting the turning actuator.

The turning actuator may be a hydraulic cylinder adapted to maintain any position between its fully retracted position and its fully extended position.

The end-stop-position-data may comprise one or more of:
an operator-input;
ground-contour-data that is representative of contours of a field that the agricultural plough is to work;
vehicle-orientation-data that is representative of the orientation of a work vehicle that is driving the agricultural plough.

The ground-contour-data may comprise sensed-contour-data that is representative of sensed parameters that are generated by one or more sensors.

The ground-contour-data may comprise stored-contour-data that is representative of ground contour information that is stored in memory.

In another embodiment, the ground-contour-data comprises lateral-contour-data that is representative of lateral contours of the ground that is to be processed by the agricultural plough, or is already being processed by the agricultural plough.

The lateral-contour-data may comprise averaged contour data.

According to an embodiment, the controller is configured for determining an actuator-control-signal that results in a roll-angle of the frame that it is aligned with a ground that the agricultural plough is processing.

According to an aspect of the present invention, there is provided a computer-implemented method of operating a plough, the plough comprising:
a reversible frame that is reversible between a first configuration and a second configuration;
a first ground engaging tool that is connected to the frame such that the first ground engaging tool is in an active position when the reversible frame is in its first configuration;
a second ground engaging tool that is connected to the frame such that the second ground engaging tool is in an active position when the reversible frame is in its second configuration;
an actuator mechanism that is configured to control reversal of the frame between its first configuration and second configuration,
wherein the method comprises:
   receiving end-stop-position-data that is representative of a suitable roll-angle of the frame in its first and/or second configuration;
   determining an actuator-control-signal for the actuator mechanism based on the end-stop-position-data, wherein the actuator-control-signal is for setting the desired roll-angle of the frame in its first and/or second configuration;
   providing the actuator-control-signal to the actuator mechanism during reversal of the frame between its first and second configurations.
According to another aspect, there is provided a computer program configured to perform the above method. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download.

There may be provided an agricultural machinery comprising an agricultural vehicle and any plough disclosed herein. The plough may be connected to the front or the rear of the agricultural vehicle.

### Brief Description of the Drawings

One or more embodiments of the present invention will now be described by way of example only, with reference to the accompanying drawings, in which:
Figure 1A shows a right-side view of an agricultural implement with fixed ground engaging tools;
Figure 1B shows a left-side view of the agricultural implement shown in Figure 1A;
Figure 1C shows a plan view of the agricultural implement shown in Figure 1A;
Figure 2 shows a schematic representation of the trajectory of an agricultural machinery within a field;
Figure 3 illustrates schematically, from behind, a ploughing operation that is being performed "in-furrow";
Figure 4 schematically shows part of a plough that includes a controller and an actuator mechanism 262;
Figure 5A illustrates the headstock of a reversible plough in a first configuration (right turning configuration);
Figure 5B illustrates the headstock of Figure 5A when the reversible plough is in a second configuration (left turning configuration); and
Figure 6A schematically illustrates a roll-over-actuator in a first and a second configuration of the frame at a reversal-angle of more than 180 degrees;
Figure 6B schematically illustrates a roll-over-actuator in a first and a second configuration of the frame at a reversal-angle of less than 180 degrees; and
Figure 7 illustrates an example embodiment of a method of operating a plough.

### Detailed Description of the Drawings

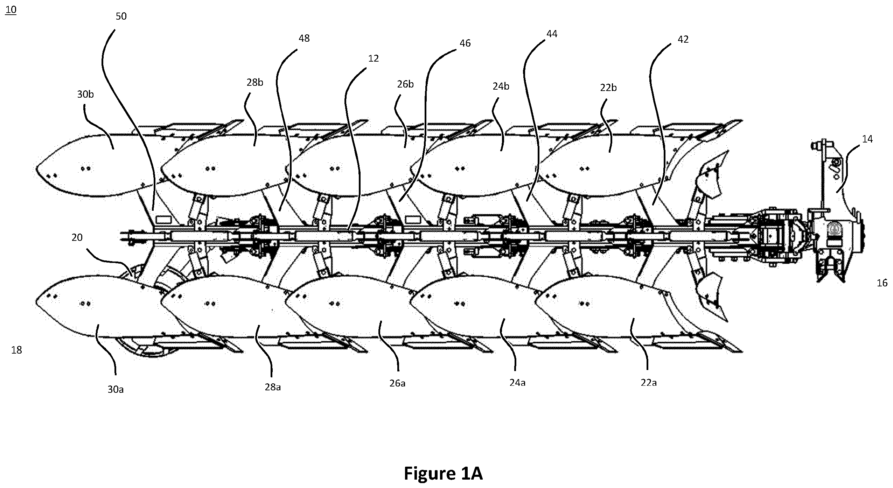

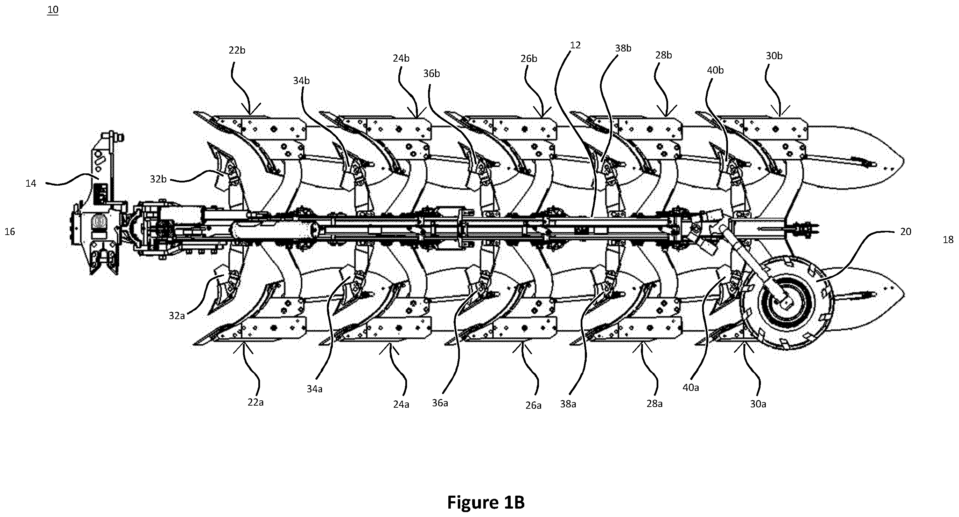

Figures 1A to 1C show various views of an agricultural implement, particularly a plough 10. As will be described in more detail below, the plough 10 shown in Figures 1A to 1C is a reversible plough.

The plough 10 comprises a frame 12. The frame 12 may be a rectangular or round tube extending between a headstock 14 at a front end 16 of the plough towards a depth wheel 20 at a rear end 18 of the plough. The frame 12 supports a variety of ground-engaging tools.

In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, are arranged on a first side of the frame 12. In a first configuration of the frame 12, illustrated in Figures 1A to 1C, the plurality of first ground engaging tools are arranged below the frame 12.

A plurality of second ground engaging tools, i.e. plough bodies 22b, 24b, 26b, 28b, 30b and skimmers 32b, 34b, 36b, 38b, and 40b, are arranged on a second side of the frame 12, opposite to the plurality of first ground engaging tools. In the first configuration of the frame 12, illustrated in Figures 1A to 1C, the plurality of second ground engaging tools are arranged above the frame.

Each of the plough bodies 22a, 22b, 24a, 24b, 26a, 26b, 28a, 28b, 30a, 30b is connected to the frame 12 by means of beams 42, 44, 46, 48, 50. Each of the beams 42, 44, 46, 48, 50 has a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural vehicle such as a work vehicle. It follows that each run of the illustrated plough 10 through a field creates five adjacent furrows.

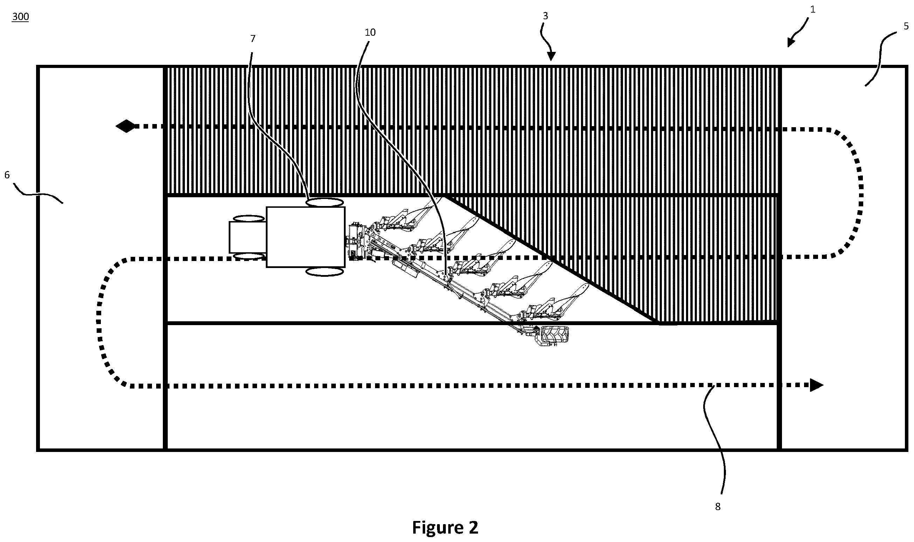

Turning to Figure 2, a typical operation of an agricultural machinery comprising a work vehicle 7 (e.g. a tractor) and an agricultural plough (implement) 10 is described. In use, the plough 10 is drawn as an attachment (implement) behind an agricultural towing vehicle (e.g. work vehicle 7). It will be appreciated that it is equivalently feasible to locate the plough 10 in front of or both in front of and behind the work vehicle 7.

Figure 2 shows a schematic field 1, which is divided into a work area 3 and headlands 5,6. A work vehicle 7 draws the plough 10 across the work area 3 in generally parallel working rows. The working rows are part of a trajectory 8 of the work vehicle 7 and typically run in parallel with a long edge of the work area 3. Each working row represents an individual run of the agricultural machinery across the field between headlands 5 and 6. As will be described in more detail below, a five-furrow plough, such as the exemplary plough 10 shown in Figures 1A to 1C creates a total of five furrows per run.

At the end of each run/working row, the work vehicle 7 and plough 10 use the upcoming headland 5 or 6 for turning around, as indicated by trajectory 8. It is known in the art that the soil of the headlands 5, 6 is subject to greater levels of soil compaction as it receives more traffic per unit area than the work area 3. In order not to disturb the soil of the headlands 5, 6 more than necessary, it is known to lift the ground engaging tools, such as the plough bodies and the skimmers, off the ground into a headland or transfer position, just before the plough 10 reaches the headlands 5 or 6 respectively. Once the work vehicle 7 and the corresponding plough 10 have turned on the headland 5, 6, the ground engaging tools of the plough 10 are, again, lowered towards an operating position to engage the soil of the work area 3.

In the illustration of Figure 2, the plough 10 is working on the work area 3 and, therefore, is arranged in the operating position. As the plough 10 reaches the border between the headland 5/6 and the work area 3, the plough 10 is transferred to a headland/transfer position. It follows that each working row starts with an adjustment of the plough from the transfer position into the operating position and ends with an adjustment of the plough from the operating position into the transfer position.

The plough 10 shown in Figures 1A to 1C is of the fully-mounted type. In fully-mounted ploughs, the weight of the plough is carried exclusively by the work vehicle when the plough is in its transfer/headland position (on the headlands). In other words, the plough is then exclusively supported by the work vehicle 7 via headstock 14 and may be lifted off the ground with a lift cylinder of a work vehicle linkage.

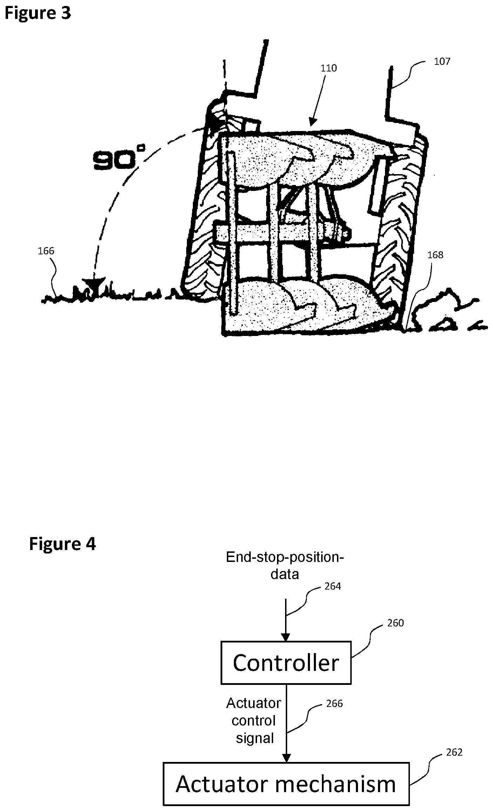

During the turning movement on the headlands, the plough 10 is also reversed. That is, the frame 12 is rotated by about 180 degrees (reversal-angle) with respect to the headstock 14 to move the plough from a first configuration to a second configuration. It will be appreciated that if the operator is ploughing in the furrow (as shown in Figure 4), then the frame 12 may not be rotated by exactly 180 degrees, the reversal-angle is more likely to be 190-200 degrees or 160-170 degrees depending on which direction the frame 12 turns. If the operator is ploughing on-land, then the frame 12 may be rotated by an angle that is closer to 180 degrees, perhaps exactly 180 degrees.

In its first configuration shown in Figures 1A to 1C, the plough 10 is set up such that plough bodies 22a, 24a, 26a, 28a, and 30a of each of the pairs are in contact with the soil. This first configuration is shown in Figure 2 and sometimes referred to as the "right turning configuration", since the mouldboards of the plough bodies 22a, 24a, 26a, 28a and 30a are arranged to move the soil sideways from left to right when viewed in the direction of travel. In its second configuration (not illustrated), the plough 10 is set up such that plough bodies 22b, 24b, 26b, 28b, and 30b of each of the pairs are in contact with the soil. This second configuration is achieved after rotating the frame by 180 degrees, such that the majority of plough bodies are arranged to the right of the work vehicle (not shown). It follows that the second configuration is also referred to as the "left turning configuration".

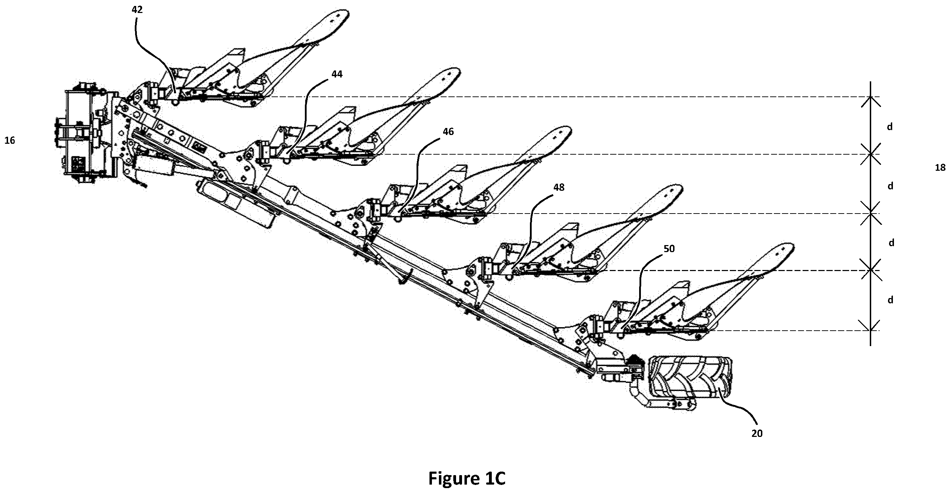

Tilling the field with the plough 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C.

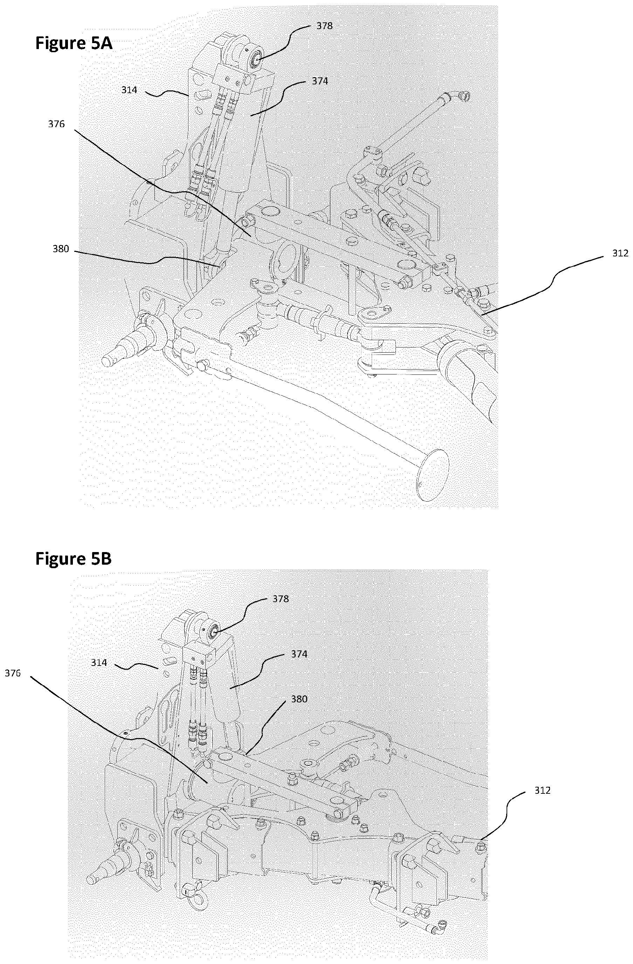

As mentioned above, when the reversible plough 10 reaches the end of the first run, the frame 12 is rotated by approximately 180 degrees (reversal-angle) with respect to the headstock 14. A turning cylinder (Figures 5A and 5B), attached to the headstock 14 may be used to rotate (reverse) the plough 10. During rotation of the frame from its first configuration into its second configuration, the first plurality of plough bodies 22a, 24a, 26a, 28a, 30a, are transferred to the top of the plough 10. At the same time, the second plurality of plough bodies 22b, 24b, 26b, 28b, 30b, which were not in use during the previous run, are then transferred to the lower end of the plough 10 and will be submerged in the soil during the next run. The reversible plough is then in its second configuration (not shown).

Traditionally, the headstock 14 can include two mechanical stops (not shown) that define end positions for the rotation of the frame as it switches between the first and second configurations. In this way, the two mechanical stops define the roll-angle of the frame 12 in the first and the second configurations respectively. As is known in the art, the roll-angle of the frame 12 represents the degree of rotation about a longitudinal axis of the frame 12. As will be explained in more detail below, the roll-angle may be defined as an angle between the frame and a horizontal plane intersecting the centre of rotation of the frame. The roll-angle of the frame, when the plough is in the first and second configurations, may be adjusted by adjusting the physical location of the mechanical stops on the headstock 14.

Executing a second run of the field with the plough 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.
Reversing the plough 10 between consecutive runs has the advantage that the plough bodies 22a, 22b, 24a, 24b, 26a, 26b, 28a, 28b, 30a, 30b that engage the soil always face the same side edge of the work area 3, irrespective of the work vehicle's orientation.

It may be advantageous for the frame 12 to be parallel with the ground surface while the plough 10 is working a field. Accordingly, it can be undesirable for the roll-angle of the frame 12 to be offset from the angle of the ground that is being processed by the plough 10. For instance, if the roll-angle of the frame 12 is not aligned with the angle of the ground then different parts of the plough bodies will penetrate the soil to different depths. This can result in uneven furrows and / or damage to components of the plough body. Alignment issues between the roll-angle of the frame and the ground frequently occur when the work vehicle is driven "in furrow" as described in more detail below.

Figure 3 illustrates schematically, from behind, a ploughing operation that is being performed "in-furrow" on a field in which the unploughed land is horizontal. In this illustration a work vehicle 107 is towing a reversible plough 110. The right-hand wheels of the work vehicle 107 are moving through furrows 168 that have already been ploughed during a previous run through the field. The left-hand wheels of the work vehicle 107 are moving over unploughed land / field 166. Therefore, as shown in the figure, the left handside of the work vehicle 107 is higher than the right-hand side such that the work vehicle 107 has a degree of roll that is offset from the unploughed field 166. However, since the unploughed field is level / horizontal (that is, it does not have any significant contours in a lateral direction), the roll-angle of the plough 110 should also be level / horizontal such that it is properly aligned with the unploughed field and the ploughing operation can be consistent. Therefore, as also shown in Figure 3, the plough 110 has a roll-angle such that it is offset from the work vehicle 107 so that the plough 110 is aligned with the unploughed field 166. This offset between the roll-angle of the work vehicle 107 and the roll-angle of the plough 110 is traditionally set by an operator manually adjusting the position of one of the mechanical end-stops that define the end positions for the rotation of the plough frame as it switches between the first and second configurations.

According to aspects of the present invention, advantageously a controller (not shown) can receive end-stop-position-data that is representative of a desired roll-angle of the frame in its first and/or second configuration and determine an actuator-control-signal for a corresponding actuator mechanism based on the end-stop-position-data. The actuator-control-signal is for setting the desired roll-angle of the frame in its first and/or second configuration. In other words, the actuator-control-signal is for setting a maximum rotation of the frame by means of the actuator mechanism when the frame is transferred between its first and second configuration. Accordingly, in some aspects of the present invention, the actuator mechanism itself can control the roll-angle of the frame in its first and second position, without the need of mechanically adjustable end-stops. For example, if during reversal of the frame, the frame should be rotated further than 180 to compensate for an "in furrow" operation, the actuator-control-signal may be determined by the controller such that the actuator mechanism rotates the reversible frame by, for example, 190 degrees.

In some examples, the actuator mechanism can set the orientation of the frame of the plough 110 relative to the work vehicle 107. Therefore, it can be beneficial for the controller to take the current roll-angle and / or the pitch angle of the work vehicle into account when determining the actuator-control-signal. For instance, the controller can determine the actuator-control-signal 166 also based on vehicle-orientation-data that is representative of the orientation of the work vehicle (or other vehicle that is driving the plough - for example pushing or towing the plough). The vehicle-orientation-data can be representative of the roll-angle and can be relative to the plough or the surface of the earth (for example using accelerometers or gyroscopes).

Figure 4 schematically shows part of a plough, that includes a controller 260 and an actuator mechanism 262. The plough also includes the following components that are not shown in Figure 4: a frame, and at least two ground engaging tools (such as a plough bodies or a skimmers) that are connected to the frame. The actuator mechanism 262 is for controlling the roll-angle of the frame. Example implementations of the actuator mechanism 262 are described below.

The controller 260 receives end-stop-position-data 264 that is representative of a desired roll-angle of the frame in its first and/or second configuration. The end-stop-position-data enables the controller to set the end position, and thus the roll-angle, of the frame after the reversal of the plough frame has been completed. To this end, the controller 260 determines an appropriate actuator-control-signal 266, on the basis of the end-stop-position-data 264 before the reversal process is commenced. As will be described below, the end-stop-position-data 264 can include live-data acquired by sensors that monitor the contours of portions of the field that are still to be ploughed or even live-data provided by an operator input. Alternatively or additionally, the end-stop-position-data 264 can be stored-data retrieved from memory. For instance, end-stop-position-data 264 may have been stored in memory as part of an earlier operation in the field. The earlier operation may have been a ploughing operation, any other agricultural operation, or a specific reconnaissance operation. As a yet further example, the end-stop-position-data 264 may be determined from existing mapping data, such as Ordnance Survey mapping data that is available for the field of interest.

The controller 260 determines the actuator-control-signal 266 for the actuator mechanism based on the end-stop-position-data 264. The actuator-control-signal 266 is for setting the roll-angle after reversal of the frame, i.e. during the headland routine, and can be used to ensure that the frame is aligned with the ground over which it is passing.

Figure 5A illustrates an exemplary headstock 314 of a reversible plough in a first configuration (right turning configuration). Figure 5B illustrates the same headstock 314 of the reversible plough in a second configuration (left turning configuration). Figure 5A shows the frame 312 of the plough extending away from the headstock 314.

The headstock 314 includes a hydraulic turning cylinder 374 that is used to rotate (reverse) the plough. One end of the cylinder 374 is connected to the headstock 314 at a cylinder-headstock-connection point 378. The other end of the cylinder 374 is connected to the frame 312 (either directly or indirectly) at a cylinder-frame-connection point 380. Also, the frame 312 is rotatably connected to the headstock 314 at a frame-headstock-connection point 376. The frame-headstock-connection point 376 is offset on the plough from the cylinder-frame-connection point 380 such that extension and retraction of the cylinder 374 causes the cylinder-frame-connection point 380 to rotate about the frame-headstock-connection point 376, which also causes the entire plough frame 312 to rotate about a longitudinal axis of the plough. This movement of the cylinder-frame-connection point 380 can be used to change the configuration of the plough 310 from the first configuration to the second configuration, and *vice versa.*

In an embodiment of the method disclosed herein, the turning cylinder 374 can be used as an actuator mechanism that ultimately sets the end-positions of the frame 312, i.e. the roll-angles in its first and/or second configuration, based on end-stop-position-data. In such examples, a pump (not shown) can be used to provide pressurised fluid to the chambers of the turning cylinder 374 such that it rotates the frame 312 about the frame-headstock-connection point 376 until it has reached the desired roll-angle with respect to the headstock and thus the work vehicle. More generally, the turning cylinder 374 is an example of a turning actuator.

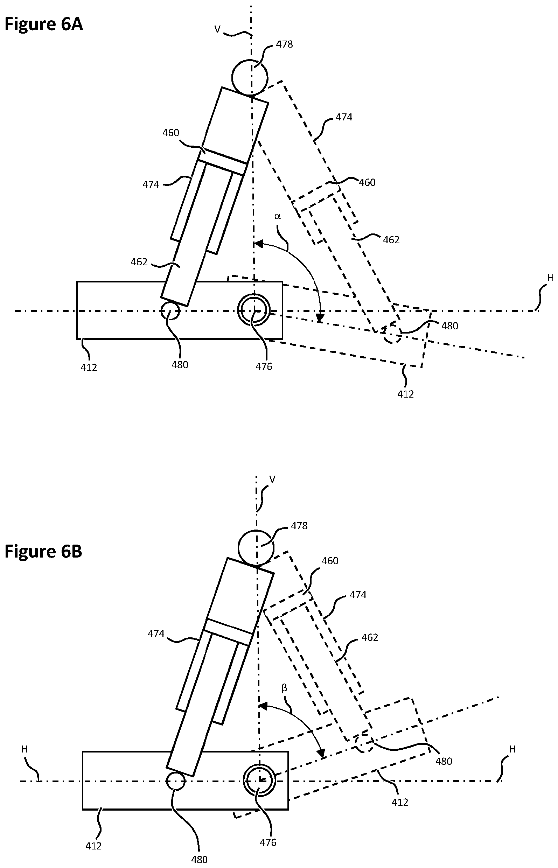

Turning to Figures 6A and 6B, there are shown simplified representations of the turning cylinder for setting various end positions of the plough frame. The turning cylinder 474 is capable of pivoting the frame 412 about a pivot 476. On the left of Figure 6A and 6B, the turning cylinder 474 that is arranged between the cylinder-headstock-connection point 478 and the cylinder-frame-connection point 480, is roughly in the centre between its fully extended and fully retracted position. In this position, the piston 460 is arranged roughly in the centre of the hydraulic cylinder 474. The corresponding piston rod 462 extends out of the cylinder by about 50% of its maximum extension. It will be appreciated that in this position of the turning cylinder 474, the frame 412 is substantially aligned with a pitch axis H of the headstock. The roll-angle (not shown) of the frame 412 can therefore be defined as 90 degrees with respect to a yaw axis V of the headstock.

The pitch axis H of the headstock is an axis drawn from side to side, passing laterally trough the centre of gravity of the headstock, when the headstock is arranged in a horizontal plane. The pitch axis H of the headstock may be aligned with a pitch axis of the corresponding work vehicle. The yaw axis V of the headstock may be aligned with a yaw axis of the corresponding work vehicle. The yaw axis V of the headstock is an axis drawn from bottom to top, passing trough the centre of gravity of the headstock, when the headstock is arranged in a horizontal plane. As will be explained in more detail below, the pitch axis H of the headstock may not always be level with a ground surface the plough is moving on. Similarly, the yaw axis V of the headstock may not always be arranged in a vertical plane.

The left sides of Figures 6A and 6B show the first configuration (right turning configuration) of the frame 412, similar to Figure 5A.

In order to transfer the frame 412 from its first configuration into its second configuration, the turning cylinder 474 is first fully retracted to transfer the frame 412 into a substantially vertical position (not shown), i.e. roughly aligning the frame 412 with the yaw axis V of the headstock. In a second step, the hydraulic turning cylinder 474 is extended once the momentum of the frame 412 has rotated the latter slightly towards the direction/side of the second configuration, i.e. towards the right side of Figures 6A or 6B. It will be appreciated that the magnitude of extension of the hydraulic turning cylinder 474, during this second step, will define the roll-angle of the frame in its second configuration (left turn configuration).

With particular reference to Figure 6A, there is shown an example of a situation in which the turning cylinder 474 has defined a roll-angle α of more than 90 degrees (e.g. 105 degrees), with respect to the yaw axis V of the headstock, in the second configuration of the frame 412. To this end, the piston 461 of the turning cylinder 474 in the second configuration of the frame 413 is substantially fully extended, such that the piston rod 463 extends fully out of the turning cylinder 474, thereby pushing the cylinder-frame-connection point 480 further away from the cylinder-headstock-connection point 478. In other words, in the example of Figure 6A, a reversal-angle, i.e. an angle between the orientation of the frame 412 in its first configuration and the frame 412 in its second configuration, is more than 180 degrees (e.g. 195 degrees). It follows that the frame 412 in its second configuration is no longer aligned with the pitch axis H of the headstock. Rather, the frame 412 in the second configuration is now arranged at an angle with respect to the pitch axis H. The roll-angle α between the yaw axis V of the headstock and the orientation of the frame 412 in its second configuration may thus be between 90 and 120 degrees. This orientation of the frame 412 in its second configuration may be useful if the right side of the work vehicle is arranged higher than the left side of the work vehicle. In this case, the work vehicle will lean to the left, such that the pitch axis H of the headstock that is connected to the work vehicle may be misaligned with ground surface. Setting a roll-angle α between the yaw axis V of the headstock and the orientation of the frame 412 of more than 90 degrees will enable the frame to be aligned with the ground surface despite the pitch axis H of the headstock being arranged at an angle with respect to the ground surface.

The position of the actuator mechanism, i.e. the hydraulic turning cylinder 474, is set by an actuator-control-signal, which, in turn, is determined by the controller (not shown) on the basis of end-stop-position-data. In the example of Figure 6A, the controller may have received end-stop-position-data comprising ground-contour-data that is representative of ground surface contours of the work area. The ground-contour-data may enable the controller to determine, during or before a headland turning routine, if the work vehicle will be leaning to one side during the next run of the field, e.g. due to a lateral incline of the work area along the next working row. In the example Figure 6A, the controller may use the ground-contour-data to identify that the work vehicle will lean to the left during the next working row. In this example, the controller will determine an actuator-control-signal that prompts the actuator mechanism to extend the hydraulic turning cylinder 474 further than is required for a horizontal arrangement of the frame 412 (i.e. set a roll-angle that is larger than 90 degrees) so as to compensate for the expected inclination of the work vehicle.

The controller may additionally be configured to receive reversal-initiation-data indicative of a time suitable for initiating the reversal process. The suitable timing will usually be at some point during the headland turning routine. The reversal-initiation-data may simply be an operator-input requesting initiation of the reversal process. The operator may, for example, provide this input by means of an operator interface (e.g. a button) on the work vehicle during the headland turning routine. Alternatively, the reversal-initiation-data may be automatically created. In one example this may be achieved by means of a location receiver identifying the position of the agricultural plough with respect to the headlands. In another example vehicle-data, such as the speed of the agricultural work vehicle, may help the controller in identifying that a headland turning routine is currently in progress.

The controller determines, on the basis of the reversal-initiation-data when the frame 412 should be transferred between its first and its second configuration. The controller will provide the actuator-control-signal to the turning cylinder 474 at the identified point in time in order to transfer the frame. The frame will then be transferred into its respective other configuration (e.g. from the first configuration to the second configuration) before the next run of the work area has commenced. In the example Figure 6A, the frame 412 of the plough will then already be at a desired roll-angle before the next run/working row is commenced.

It will be appreciated that, according to the present invention, a mechanical end stop defining the orientation of the frame 412 in its first and second configuration is no longer required. Rather, the extent of the turning actuator 472 in the first and/or the second configuration of the frame will define the roll-angle α with respect to the yaw axis V of the headstock. The controller is, therefore, able to automatically adjust the orientation (i.e. the roll-angle) of the frame 412 in its first and second configuration by determining an appropriate actuator-control-signal for the turning cylinder 474. It follows that the controller may adjust the frame to any desired roll-angle α without the need for the operator to manually adjust end stop screws.

Turning to Figure 6B, a second example is shown, in which the frame 412 is again arranged at an angle with respect to the pitch axis H of the headstock when the frame 412 is in its second configuration. In contrast to Figure 6A, the example Figure 6B shows that the frame 412 is arranged at an angle β between 70 degrees and 90 degrees (e.g. 75 degrees) with respect to the yaw axis V of the headstock. To this end, the turning cylinder 474 is slightly more retracted, when compared to the cylinder position of the first configuration of the frame (e.g. the left side of Figure 6B).

It will be appreciated that, as shown in Figure 6A and 6B, the turning actuator is capable of setting a variety of different roll-angles of the frame in its first and/or second configuration based on the actuator-control-signal provided by the controller. Generally, in the embodiment of Figures 6A and 6B, the roll-angle may be increased by extending the turning cylinder and decreased by retracting the turning cylinder.

The telescopic turning cylinder 474 of Figures 6A and 6B is a hydraulic cylinder that is adapted to be brought into and maintain any position between its fully retracted position and its fully extended position. For example, the ports of the hydraulic cylinder 474 may be connected to load holding valves that maintain the position of the hydraulic cylinder in a known manner, once the desired roll-angle of the first or second configuration has been reached.

Returning to Figure 4, examples of end-stop-position-data comprises one or more of:
- An operator input. In detail, the operator may directly provide the controller with a desired roll-angle to be set during the reversal process. For example, if the operator intends on ploughing the next working row "in furrow", the operator may define a roll-angle for the first or second configuration to be more than 90 degrees, in order to compensate for the expected lean of the agricultural work vehicle. Alternatively, the operator may simply choose an option, such as "in furrow" for the next working row and the controller will calculate or look-up a suitable roll-angle on the basis thereof. To this end, the controller may determine the depth of the furrows of the previous working row and calculate an expected inclination during the next working row. Based on the expected inclination, the controller may then define the desired roll-angle for the next run.
- Ground-contour-data that is representative of contours of a field that the agricultural plough is to work. The ground-contour-data may be representative of lateral contours of the ground; that is, contours that are transverse to a longitudinal direction of the plough. The ground-contour-data may include information about the lateral slope of the field to be worked on the basis of which the controller can determine an appropriate roll-angle to compensate for the slope after the reversal and before execution of the next working row. The ground-contour-data may be used by the controller together with data indicating that the next working row is to be processed "in furrow" for determining a suitable roll-angle.
- Vehicle-orientation-data that is representative of the orientation of a work vehicle that is driving the agricultural plough. Rather than calculating the future inclination of the work vehicle by means of ground-contour-data as described above, the controller may base its determination of a suitable, desired roll-angle on the current orientation of the work vehicle. For example, the vehicle-orientation-data may include information about the lateral inclination of the work vehicle, such that the desired roll-angle of the frame can be adjusted to compensate for any inclination that differs from the horizontal plane.

In some examples the ground-contour-data and/or the vehicle-orientation-data can include sensed-contour-data and/or sensed-vehicle-data that is representative of sensed parameters that are generated by one or more sensors.

In some examples, the one or more sensors can be located on a work vehicle (or other agricultural vehicle) that is pushing or pulling the plough. In other examples, one or more sensors can be located on the plough itself.

In one example, the sensed-data may represent contours of the ground relative to the orientation of the vehicle and/or the orientation of the vehicle with respect to a reference, such as the horizontal plane. For instance, if the work vehicle is driven on a lateral slope, the work vehicle is already taken into account by the sensors and the orientation of the frame of the plough relative to the work vehicle can be set such that it compensates for any inclination of the work vehicle during the reversal process, i.e. before the next working row is started.

Alternatively, or in addition to the sensed-data, the ground-contour-data and/or the vehicle-orientation-data may include stored-contour-data and/or stored-orientation-data that is stored in a memory. The stored-data may be acquired in previous runs of the field by the same or different agricultural machinery.

The ground-contour-data may comprise averaged contour data, for instance averaged over the width of the plough (for lateral-contour-data). This can be used to improve the ploughing operation for the majority of the plough bodies on the plough and result in an overall good control of the actuator mechanism that it is not adjusted too frequently.

On the basis of the above end-stop-position-data the control unit determines an actuator-control-signal for the actuator mechanism. To this end, the control unit may determine (e.g. calculate) a desired roll angle on the basis of the end-stop-position-data. The control unit may then calculate or look-up an actuator-control-signal needed to obtain the desired roll-angle.

In some embodiments, the actuator-control-signal may be applicable to supply one or more of the chambers of a hydraulic cylinder of the actuator mechanism with hydraulic working fluid for an amount of time that will move the hydraulic cylinder into the desired position. To this end, the control-unit may look up or calculate a suitable supply time on the basis of the desired roll-angle indicated by the end-stop-position-data.

In other embodiments, the actuator-control-signal may be applicable to supply one or more of the chambers of a hydraulic cylinder of the actuator mechanism with hydraulic working fluid until a cylinder position is reached that matches the desired roll-angle. To this end, the plough may comprise a feedback sensor for providing the control unit with sensor-data that is indicative of a position of the actuator mechanism, e.g. a position of the hydraulic cylinder of the actuator mechanism shown in Figures 6A and 6B.

In one embodiment, the feedback sensor may be a position sensor. The position sensor may provide position-data, e.g. a position of the piston within the cylinder, to the control unit. The position sensor may be an electric, mechanical, and/or magnetic sensor associated with the hydraulic cylinder. The control unit may determine a desired position on the basis of the desired roll-angle indicated by the end-stop-position-data. The control-unit may provide a first actuator-control-signal that is applicable to provide hydraulic fluid for extending the hydraulic cylinder. While the hydraulic cylinder is being moved (e.g. extended), the control unit may compare the values of the position-data with the desired position and stop movement of the hydraulic cylinder once the desired position is reached. To this end, the control unit may provide the first actuator-control-signal to a corresponding fluid supply system until the desired position is reached. The control unit may then determine a second actuator-control-signal that is applicable to stop the supply of hydraulic working fluid to the hydraulic cylinder when the desired position is reached.

The above position sensor is one specific example of a feedback sensor that may be used by the control unit to determine a suitable actuator-control-signal. Of course, the plough of the present invention may alternatively or additionally comprise other feedback sensors that allow the control unit to monitor if the desired position has been reached. In one example, that feedback sensor may be an angle sensor configured to continuously or intermittently measure the roll-angle between the yaw axis V of the headstock and the frame. The control unit may be configured to provide the above, first actuator-control-signal for as long as the measured roll-angle differs from the desired roll-angle. Once the desired roll-angle has been reached, the control unit may stop hydraulic flow by providing the above, second actuator-control-signal. Other feedback sensors may include pressure sensors for determining hydraulic working fluid pressures within the chambers of the hydraulic cylinder, on the basis that every roll-angle between the yaw direction V of the headstock and the frame will change the chamber pressures of the hydraulic cylinder.

In the above embodiments, a feedback sensor is used by the control unit to select one of two distinct actuator-control-signals. However, it should be appreciated that the control unit may determine any number of suitable actuator-control-signals to reach the desired position of the respective actuator of the actuator mechanism on the basis of the sensor-data. In one example, the control unit may determine the actuator-control-signal on the basis of a difference between a desired actuator position and a measured actuator position that is represented by the sensor data. In this example, the closer the actuator gets to the desired position, i.e. the smaller the difference, the less flow the control unit will provide to the hydraulic actuator by means of corresponding actuator-control-signals.

It should also be appreciated that the present invention is not limited to actuator mechanisms including hydraulic cylinders, such as the actuator mechanism shown in Figures 6A and 6B. Rather, any other suitable type of actuator such as electric, mechanical, and/or pneumatic actuators may be controlled by the control unit on the basis of the above end-stop-position-data.

As mentioned above, in some embodiments, the controller may also receive reversal-initiation-data that is representative of a time for initiating the reversal process. It will be appreciated that the reversal process is usually started during the headland routine. According to this embodiment, the reversal process may either be started manually or automatically, but in any case, during the headland turning routine, i.e. between working rows.

In one example, the reversal-initiation-data comprises an operator-input requesting initiation of the reversal process. To this end, the operator may have access to a controller interface, such as a manual key or button that triggers the reversal process instructed by the controller.

The reversal-initiation-data may also comprise location-data regarding the position of the agricultural plough. According to this embodiment, the controller may be provided with location-data such as GPS co-ordinates of the work vehicle or the agricultural plough in order to identify the position of the agricultural plough on the field. Accordingly, the controller may determine a suitable starting time for the reversal process, e.g. when the agricultural plough is about halfway through the headland turning process.

The reversal-initiation-data may also comprise vehicle-data representative of operating parameters of a work vehicle driving the plough. One example of suitable vehicle-data is the speed and direction of the agricultural plough over time. This speed profile can be used by the controller to identify an appropriate time for starting the reversal-initiation-process. For example, the controller may use the vehicle-data to identify a point in time when the agricultural plough changes travel direction from forwards travel to rearwards travel (e.g. during a reverse headland turning routine) to initiate the reversal process.

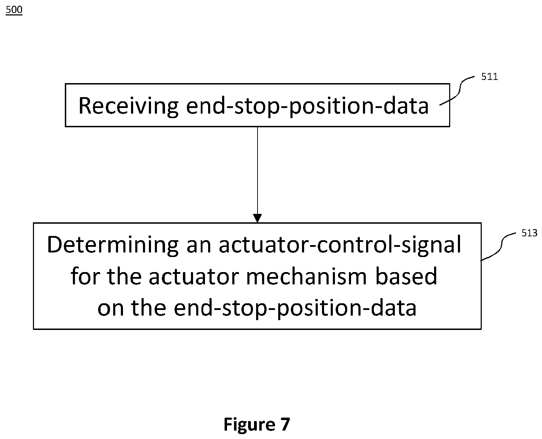

Figure 7 illustrates an example embodiment method 500 of operating a plough according to the present invention. As described above, the plough includes a reversible frame that can be transferred between a first configuration and a second configuration; a first ground engaging tool that is connected to the frame such that the first ground engaging tool is in an active position when the reversible frame is in its first configuration; a second ground engaging tool that is connected to the frame such that the second ground engaging tool is in an active position when the reversible frame is in its second configuration; and an actuator mechanism that is configured to control reversal of the frame between its first and second configuration.

At step 511, the method 500 receives end-stop-position-data. As described above, the end-stop-position-data is representative of a suitable roll-angle of the frame in its first and/or second configuration. It will be understood that the suitable roll-angle may change for each of the working rows such that the end-stop-position-data may be received continuously or intermittently, particularly before the start of each of the working rows (e.g. during the headland turning routine).

At step 513, the method 500 determines an actuator-control-signal for the actuator mechanism based on the end-stop-position-data. The actuator-control-signal is for setting the roll-angle of the frame, for instance such that it is aligned with the ground that will be processed during the next working row. The actuator-control-signal is preferably provided to a corresponding actuator mechanism immediately before the reversal process.

In examples where the end-stop-position-data is representative of contours of the field (e.g. a ground-contour-data) the controller may automatically determine a desired roll-angle suitable for an inclination of the next working row provided by the ground-contour-data and, based on the desired roll-angle may determine an appropriate actuator-control-signal for adjusting the roll-angle of the frame correspondingly when reversing the frame during the headland routine.

The controller can be implemented in a number of different ways. For instance, the controller can apply mathematical equations to the received ground-contour-data (and any other data that it processes) in order to determine the actuator-control-signal. Alternatively, the controller can use a database or a look-up table to determine an appropriate actuator-control-signal for received ground-contour-data (and any other data that it processes).

## Claims

1. An agricultural plough (10) comprising:
a reversible frame (12) that is transferrable between a first configuration and a second configuration;
a first ground engaging tool (22a) that is connected to the frame such that the first ground engaging tool is in an active position when the frame (12) is in its first configuration;
a second ground engaging tool (22b) that is connected to the frame (12) such that the second ground engaging tool is in an active position when the frame (12) is in its second configuration;
an actuator mechanism (262) that is configured to control reversal of the frame (12) between its first configuration and second configuration; and
a controller (260) that is configured to:
receive end-stop-position-data (264) that is representative of a desired roll-angle of the frame in its first and/or second configuration;
determine an actuator-control-signal (266) for the actuator mechanism (262) based on the end-stop-position-data (264), wherein the actuator-control-signal (266) is for setting the desired roll-angle of the frame in its first and/or second configuration;
provide the actuator-control-signal (266) to the actuator mechanism (262) during reversal of the frame (12) between its first and second configurations.

2. The agricultural plough of Claim 1, wherein the controller (260) is configured to receive reversal-initiation-data representative of a time for initiating the reversal process, the reversal-initiation-data preferably comprising one or more of:
an operator-input requesting initiation of the reversal process;
location-data regarding the position of the agricultural plough;
vehicle-data representative of operating parameters of a work vehicle driving the plough.

3. The agricultural plough of Claim 2, wherein the vehicle-data comprises motion-data representative of the speed and direction of movement of a work vehicle connected to the agricultural plough.

4. The agricultural plough of any of Claims 1 to 3, comprising a feedback sensor for determining sensor-data indicative of a position of the actuator mechanism, wherein the control unit is configured to:
determine a desired actuator position on the basis of the end-stop-position-data;
receive the sensor-data;
determine a current position of the actuator mechanism on the basis of the sensor-data;
compare the current position of the actuator mechanism to the desired actuator position; and
determine the actuator-control-signal (266) for the actuator mechanism (262) based on the comparison result.

5. The agricultural plough of any of Claims 1 to 4, wherein the actuator mechanism (262) comprises a turning actuator (474) that is capable of setting a plurality of different roll-angles of the frame (12) in its first and/or second configuration based on the actuator-control-signal (266).

6. The agricultural plough of Claim 5, wherein the turning actuator (474) is a telescopic turning cylinder transferable between a fully extended and a fully retracted position, and wherein the turning actuator (474) is connected to the frame (12) in such a way that, in the first and/or the second configuration of the frame (12), the controller is configured to increase the roll-angle by extending the turning actuator (474) and decrease the roll-angle by retracting the turning actuator (474).

7. The agricultural plough of Claim 5 or 6, wherein the turning actuator (474) is a hydraulic cylinder adapted to maintain any position between its fully retracted position and its fully extended position.

8. The agricultural plough of any of Claims 1 to 7, wherein the end-stop-position-data (264) comprises one or more of:
an operator-input;
ground-contour-data that is representative of contours of a field that the agricultural plough is to work;
vehicle-orientation-data that is representative of the orientation of a work vehicle that is driving the agricultural plough.

9. The agricultural plough of Claim 8, wherein the ground-contour-data comprises sensed-contour-data that is representative of sensed parameters that are generated by one or more sensors.

10. The agricultural plough of Claim 8, wherein the ground-contour-data comprises stored-contour-data that is representative of ground contour information that is stored in memory.

11. The agricultural plough of any one of Claims 8 to 10, wherein the ground-contour-data comprises lateral-contour-data that is representative of lateral contours of the ground that is to be processed by the agricultural plough, or is already being processed by the agricultural plough.

12. The agricultural plough of Claim 11, wherein the lateral-contour-data comprises averaged contour data.

13. The agricultural plough of any of Claims 1 to 12, wherein the controller (260) is configured for determining an actuator-control-signal (266) that results in a roll-angle of the frame (12) that it is aligned with a ground that the agricultural plough is processing.

14. A computer-implemented method of operating a plough, the plough comprising:
a reversible frame (12) that is reversible between a first configuration and a second configuration;
a first ground engaging tool (22a) that is connected to the frame (12) such that the first ground engaging tool is in an active position when the reversible frame (12) is in its first configuration;
a second ground engaging tool (22b) that is connected to the frame (12) such that the second ground engaging tool is in an active position when the reversible frame (12) is in its second configuration;
an actuator mechanism (262) that is configured to control reversal of the frame (12) between its first configuration and second configuration,
wherein the method comprises:
receiving end-stop-position-data (264) that is representative of a suitable roll-angle of the frame in its first and/or second configuration;
determining an actuator-control-signal (266) for the actuator mechanism (262) based on the end-stop-position-data (264), wherein the actuator-control-signal (266) is for setting the desired roll-angle of the frame in its first and/or second configuration;
providing the actuator-control-signal (266) to the actuator mechanism (262) during reversal of the frame (12) between its first and second configurations.

15. A computer program configured to perform, when run on a computer, the method of Claim 14

## Patentansprüche

1. Landwirtschaftlicher Pflug (10), der umfasst:
einen umkehrbaren Pflugbaum (12), der zwischen einer ersten Konfiguration und einer zweiten Konfiguration überführbar ist;
ein erstes Bodeneingriffswerkzeug (22a), das in der Weise mit dem Pflugbaum verbunden ist, dass das erste Bodeneingriffswerkzeug in einer aktiven Position ist, wenn der Pflugbaum (12) in seiner ersten Konfiguration ist;
ein zweites Bodeneingriffswerkzeug (22b), das in der Weise mit dem Pflugbaum (12) verbunden ist, dass das zweite Bodeneingriffswerkzeug in einer aktiven Position ist, wenn der Pflugbaum (12) in seiner zweiten Konfiguration ist;
einen Aktuatormechanismus (262), der dafür konfiguriert ist, die Umkehr des Pflugbaums (12) zwischen seiner ersten Konfiguration und seiner zweiten Konfiguration zu steuern; und
einen Controller (260), der konfiguriert ist zum:
Empfangen von Endanschlags-Positionsdaten (264), die einen gewünschten Querneigungswinkel des Pflugbaums in seiner ersten und/oder zweiten Konfiguration repräsentieren;
Bestimmen eines Aktuatorsteuersignals (266) für den Aktuatormechanismus (262) auf der Grundlage der Endanschlags-Positionsdaten (264), wobei das Aktuatorsteuersignal (266) zum Einstellen des gewünschten Querneigungswinkels des Pflugbaums in seiner ersten und/oder zweiten Konfiguration dient;
Bereitstellen des Aktuatorsteuersignals (266) für den Aktuatormechanismus (262) während der Umkehr des Pflugbaums (12) zwischen seiner ersten und seiner zweiten Konfiguration.

2. Landwirtschaftlicher Pflug nach Anspruch 1, wobei der Controller (260) dafür konfiguriert ist, Umkehrinitiierungsdaten zu empfangen, die einen Zeitpunkt zum Initiieren des Umkehrprozesses repräsentieren, wobei die Umkehrinitiierungsdaten vorzugsweise eines oder mehrere der Folgenden umfassen:
eine Betreibereingabe, die eine Initiierung des Umkehrprozesses anfordert;
Ortsdaten hinsichtlich der Position des landwirtschaftlichen Pflugs;
Fahrzeugdaten, die Betriebsparameter eines Arbeitsfahrzeugs, das den Pflug antreibt, repräsentieren.

3. Landwirtschaftlicher Pflug nach Anspruch 2, wobei die Fahrzeugdaten Bewegungsdaten umfassen, die die Geschwindigkeit und die Bewegungsrichtung eines mit dem landwirtschaftlichen Pflug verbundenen Arbeitsfahrzeugs repräsentieren.

4. Landwirtschaftlicher Pflug nach einem der Ansprüche 1 bis 3, der einen Rückmeldesensor zum Bestimmen von Sensordaten, die eine Position des Aktuatormechanismus angeben, umfasst, wobei die Steuereinheit konfiguriert ist zum:
Bestimmen einer gewünschten Aktuatorposition auf der Grundlage der Endanschlags-Positionsdaten;
Empfangen der Sensordaten;
Bestimmen einer gegenwärtigen Position des Aktuatormechanismus auf der Grundlage der Sensordaten;
Vergleichen der gegenwärtigen Position des Aktuatormechanismus mit der gewünschten Aktuatorposition; und
Bestimmen des Aktuatorsteuersignals (266) für den Aktuatormechanismus (262) auf der Grundlage des Vergleichsergebnisses.

5. Landwirtschaftlicher Pflug nach einem der Ansprüche 1 bis 4, wobei der Aktuatormechanismus (262) einen Wendeaktuator (474) umfasst, der in der Lage ist, auf der Grundlage des Aktuatorsteuersignals (266) mehrere verschiedene Querneigungswinkel des Pflugbaums (12) in seiner ersten und/oder zweiten Konfiguration einzustellen.

6. Landwirtschaftlicher Pflug nach Anspruch 5, wobei der Wendeaktuator (474) ein ausfahrbarer Wendezylinder ist, der zwischen einer vollständig ausgefahrenen und einer vollständig eingefahrenen Position überführbar ist, und wobei der Wendeaktuator (474) in einer Weise mit dem Pflugbaum (12) verbunden ist, dass der Controller in der ersten und/oder in der zweiten Konfiguration des Pflugbaums (12) dafür konfiguriert ist, den Querneigungswinkel durch Ausfahren des Wendeaktuators (474) zu erhöhen und den Querneigungswinkel durch Einfahren des Wendeaktuators (474) zu verringern.

7. Landwirtschaftlicher Pflug nach Anspruch 5 oder 6, wobei der Wendeaktuator (474) ein Hydraulikzylinder ist, der dafür ausgelegt ist, irgendeine Position zwischen seiner vollständig eingefahrenen Position und seiner vollständig ausgefahrenen Position aufrechtzuerhalten.

8. Landwirtschaftlicher Pflug nach einem der Ansprüche 1 bis 7, wobei die Endanschlags-Positionsdaten (264) eines oder mehrere der Folgenden umfassen:
eine Betreibereingabe;
Bodenkonturdaten, die die Konturen eines Felds, das der landwirtschaftliche Pflug bearbeiten soll, repräsentieren;
Fahrzeugorientierungsdaten, die die Orientierung eines Arbeitsfahrzeugs, das den landwirtschaftlichen Pflug antreibt, repräsentieren.

9. Landwirtschaftlicher Pflug nach Anspruch 8, wobei die Bodenkonturdaten erfasste Konturdaten, die erfasste Parameter repräsentieren, die durch einen oder mehrere Sensoren erzeugt werden, umfassen.

10. Landwirtschaftlicher Pflug nach Anspruch 8, wobei die Bodenkonturdaten gespeicherte Konturdaten umfassen, die Bodenkonturinformationen repräsentieren, die in einem Speicher gespeichert sind.

11. Landwirtschaftlicher Pflug nach einem der Ansprüche 8 bis 10, wobei die Bodenkonturdaten Querkonturdaten umfassen, die Querkonturen des Bodens repräsentieren, der durch den landwirtschaftlichen Pflug bearbeitet werden soll oder der durch den landwirtschaftlichen Pflug bereits bearbeitet wird.

12. Landwirtschaftlicher Pflug nach Anspruch 11, wobei die Querkonturdaten gemittelte Konturdaten umfassen.

13. Landwirtschaftlicher Pflug nach einem der Ansprüche 1 bis 12, wobei der Controller (260) dafür konfiguriert ist, ein Aktuatorsteuersignal (266) zu bestimmen, das zu einem Querneigungswinkel des Pflugbaums (12) führt, damit er auf einen Boden, den der landwirtschaftliche Pflug bearbeitet, ausgerichtet ist.

14. Computerimplementiertes Verfahren zum Betreiben eines Pflugs, wobei der Pflug umfasst:
einen umkehrbaren Pflugbaum (12), der zwischen einer ersten Konfiguration und einer zweiten Konfiguration umkehrbar ist;
ein erstes Bodeneingriffswerkzeug (22a), das in der Weise mit dem Pflugbaum (12) verbunden ist, dass das erste Bodeneingriffswerkzeug in einer aktiven Position ist,
wenn der umkehrbare Pflugbaum (12) in seiner ersten Konfiguration ist;
ein zweites Bodeneingriffswerkzeug (22b), das in der Weise mit dem Pflugbaum (12) verbunden ist, dass das zweite Bodeneingriffswerkzeug in einer aktiven Position ist, wenn der umkehrbare Pflugbaum (12) in seiner zweiten Konfiguration ist;
einen Aktuatormechanismus (262), der dafür konfiguriert ist, die Umkehr des Pflugbaums (12) zwischen seiner ersten Konfiguration und seiner zweiten Konfiguration zu steuern,
wobei das Verfahren umfasst:
Empfangen von Endanschlags-Positionsdaten (264), die einen geeigneten Querneigungswinkel des Pflugbaums in seiner ersten und/oder zweiten Konfiguration repräsentieren;
Bestimmen eines Aktuatorsteuersignals (266) für den Aktuatormechanismus (262) auf der Grundlage der Endanschlags-Positionsdaten (264), wobei das Aktuatorsteuersignal (266) zum Einstellen des gewünschten Querneigungswinkels des Pflugbaums in seiner ersten und/oder zweiten Konfiguration dient;
Bereitstellen des Aktuatorsteuersignals (266) für den Aktuatormechanismus (262) während der Umkehr des Pflugbaums (12) zwischen seiner ersten und seiner zweiten Konfiguration.

15. Computerprogramm, das dafür konfiguriert ist, das Verfahren nach Anspruch 14 auszuführen, wenn es in einem Computer ausgeführt wird.

## Revendications

1. Une charrue agricole (10) comprenant :
un châssis réversible (12) qui peut être transféré entre une première configuration et une deuxième configuration ;
un premier outil d'attaque du sol (22a) qui est relié au châssis de telle sorte que le premier outil d'attaque du sol est dans une position active lorsque le châssis (12) est dans sa première configuration ;
un deuxième outil d'attaque du sol (22b) qui est relié au châssis (12) de telle sorte que le deuxième outil d'attaque du sol est dans une position active lorsque le châssis (12) est dans sa deuxième configuration ;
un mécanisme d'actionnement (262) qui est configuré pour commander l'inversion du châssis (12) entre sa première configuration et sa deuxième configuration ; et
un contrôleur (260) qui est configuré pour :
recevoir des données de position de fin de course (264) qui sont représentatives d'un angle de roulis souhaité du châssis dans sa première et/ou sa deuxième configuration ;
déterminer un signal de commande de l'actionneur (266) pour le mécanisme d'actionnement (262) sur la base des données de position de fin de course (264), le signal de commande de l'actionneur (266) étant destiné à définir l'angle de roulis souhaité du châssis dans sa première et/ou sa deuxième configuration ;
fournir le signal de commande de l'actionneur (266) au mécanisme d'actionnement (262) pendant l'inversion du châssis (12) entre sa première et sa deuxième configuration.

2. La charrue agricole selon la revendication 1, le contrôleur (260) étant configuré pour recevoir des données de déclenchement de l'inversion, représentatives d'un moment de déclenchement du processus d'inversion, les données de déclenchement de l'inversion comprenant de préférence un ou plusieurs des éléments suivants :
une entrée de l'opérateur demandant le déclenchement du processus d'inversion ;
des données de localisation concernant la position de la charrue agricole ;
des données relatives au véhicule représentatives des paramètres de fonctionnement d'un véhicule de travail conduisant la charrue.

3. La charrue agricole selon la revendication 2, les données relatives au véhicule comprenant des données de mouvement représentatives de la vitesse et de la direction du mouvement d'un véhicule de travail relié à la charrue agricole.

4. La charrue agricole selon l'une des revendications 1 à 3, comprenant un capteur de retour d'information pour déterminer des données de capteur indiquant une position du mécanisme d'actionnement, l'unité de commande étant configurée pour :
déterminer une position souhaitée de l'actionneur sur la base des données de position de fin de course ;
recevoir les données du capteur ;
déterminer une position actuelle du mécanisme d'actionnement sur la base des données du capteur ;
comparer la position actuelle du mécanisme d'actionnement à la position d'actionnement souhaitée ; et
déterminer le signal de commande de l'actionneur (266) pour le mécanisme d'actionnement (262) sur la base du résultat de la comparaison.

5. La charrue agricole selon l'une des revendications 1 à 4, le mécanisme d'actionnement (262) comprenant un actionneur de rotation (474) pouvant régler une pluralité d'angles de roulis différents du châssis (12) dans sa première et/ou sa deuxième configuration sur la base du signal de commande de l'actionneur (266).

6. La charrue agricole selon la revendication 5, l'actionneur de rotation (474) étant un cylindre de rotation télescopique pouvant être transféré entre une position complètement déployée et une position complètement rétractée, et l'actionneur de rotation (474) étant relié au châssis (12) de telle sorte que, dans la première et/ou la deuxième configuration du châssis (12), le contrôleur est configuré pour augmenter l'angle de roulis en déployant l'actionneur de rotation (474) et diminuer l'angle de roulis en rétractant l'actionneur de rotation (474).

7. La charrue agricole selon la revendication 5 ou 6, l'actionneur de rotation (474) étant un cylindre hydraulique adapté pour maintenir n'importe quelle position entre sa position complètement rétractée et sa position complètement déployée.

8. La charrue agricole selon l'une des revendications 1 à 7, les données de position de fin de course (264) comprenant un ou plusieurs des éléments suivants :
une entrée de l'opérateur ;
des données relatives aux contours du sol qui sont représentatives des contours d'un champ que la charrue agricole doit travailler ;
des données relatives à l'orientation du véhicule qui sont représentatives de l'orientation d'un véhicule de travail qui conduit la charrue agricole.

9. La charrue agricole selon la revendication 8, les données relatives aux contours du sol comprenant les données de contours détectées qui sont représentatives des paramètres détectés qui sont générés par un ou plusieurs capteurs.

10. La charrue agricole selon la revendication 8, les données relatives aux contours du sol comprenant les données de contours stockées qui sont représentatives des informations de contour du sol stockées en mémoire.

11. La charrue agricole selon l'une des revendications 8 à 10, les données relatives aux contours du sol comprenant des données de contours latéraux qui sont représentatives des contours latéraux du sol qui doit être travaillé par la charrue agricole ou qui est déjà travaillé par la charrue agricole.

12. La charrue agricole selon la revendication 11, les données de contours latéraux comprenant des données de contours moyennes.

13. La charrue agricole selon l'une des revendications 1 à 12, le contrôleur (260) étant configuré pour déterminer un signal de commande de l'actionneur (266) qui entraîne un angle de roulis du châssis (12) qui est aligné sur le sol que la charrue agricole est en train de travailler.

14. Un procédé de fonctionnement d'une charrue mis en oeuvre par ordinateur, la charrue comprenant :
un châssis réversible (12) qui est réversible entre une première configuration et une deuxième configuration ;
un premier outil d'attaque du sol (22a) qui est relié au châssis (12) de telle sorte que le premier outil d'attaque du sol est dans une position active lorsque le châssis réversible (12) est dans sa première configuration ;
un deuxième outil d'attaque du sol (22b) qui est relié au châssis (12) de sorte que le deuxième outil d'attaque du sol est dans une position active lorsque le châssis réversible (12) est dans sa deuxième configuration ;
un mécanisme d'actionnement (262) qui est configuré pour commander l'inversion du châssis (12) entre sa première configuration et sa deuxième configuration,
la méthode comprenant :
la réception de données de position de fin de course (264) qui sont représentatives d'un angle de roulis souhaité du châssis dans sa première et/ou sa deuxième configuration ;
la détermination d'un signal de commande de l'actionneur (266) pour le mécanisme d'actionnement (262) sur la base des données de position de fin de course (264), le signal de commande de l'actionneur (266) étant destiné à définir l'angle de roulis souhaité du châssis dans sa première et/ou sa deuxième configuration ;
la fourniture du signal de commande de l'actionneur (266) au mécanisme d'actionnement (262) pendant l'inversion du châssis (12) entre sa première et sa deuxième configuration.

15. Un programme informatique configuré pour réaliser, lorsqu'il est exécuté sur un ordinateur, la méthode selon la revendication 14.
